# FASCICULE DE BREVET EUROPEEN

(11) **EP 3 580 398 B1**
(45) Date de publication et mention de la délivrance du brevet: **25.11.2020**
(21) Numéro de dépôt: 17829713.1
(22) Date de dépôt: 21.12.2017
(51) Int. Cl.: E04B 1/28, E04B 1/343, E04B 1/58, E04B 1/24

(54) **SYSTEME DE CONSTRUCTION POUR UN MODULE D'UNE HABITATION**
KONSTRUKTIONSSYSTEM ZUM BAUEN EINES MODULS EINER BEHAUSUNG
CONSTRUCTION SYSTEM FOR BUILDING A MODULE OF A DWELLING

(30) Priorité: 13.02.2017 CH 1642017
(43) Date de publication de la demande: 18.12.2019
(73) Titulaire: UHCS Property SA, 1950 Sion (CH)
(72) Inventeur: USTINOV, Igor, 1012 Lausanne (CH)
(74) Mandataire: Cronin, Brian Harold John
(86) Numéro de dépôt international: PCT/IB2017/058262
(87) Numéro de publication internationale: WO 2018/146533

(56) Documents cités:
- DE-A1- 2 606 353
- DE-U1-202010 002 699

## Description

La présente invention se rapporte à un système de construction pour un module d'une habitation dont les éléments principaux sont en matière plastique.

Il est déjà connu de l'état de la technique des conditionnements de produits pour créer des assemblages en matière essentiellement plastique. WO0212077 décrit une bouteille en matière plastique moulée ayant des moyens de connexion de sorte que la bouteille peut être reliée à une autre bouteille côte à côte par des moyens de connexion comme par exemple des queues d'aronde. Les bouteilles peuvent également être assemblées les unes sur les autres permettant alors de réaliser des assemblages de bouteilles.

On connait également WO2012045061 qui décrit des dispositifs et des récipients qui sont extensibles, modulaires, et qui peuvent être verrouillés latéralement et verticalement avec d'autres récipients semblables pour toute une variété d'applications.

On connait également des individus qui ont entrepris et réalisé des constructions telles que des maisons à base de bouteilles en plastique et la plupart du temps les bouteilles sont posées de manière horizontale.

Des systèmes de constructions traditionnels, à base de briques par exemple, sont également connus et très répandus, néanmoins, le coût d'une construction reste important.

Par ailleurs, la demanderesse a déposé une demande brevet, numéro CH707115, pour une bouteille capable de s'assembler avec d'autres dans le but de réaliser une construction. Ces bouteilles ont une forme avec une partie frustoconique mâle / femelle.

La demanderesse a également déposé une autre demande de brevet, numéro CH708086, pour une bouteille comportant à sa partie supérieure un double goulot cylindrique mâle comportant des premiers moyens d'accouplement mécanique actionnables par rotation. La partie inférieure de la bouteille comporte un double goulot cylindrique comportant des seconds moyens d'accouplement mécanique actionnables par rotation et complémentaires auxdits premiers moyens d'actionnement mécanique. La partie supérieure d'une bouteille peut être accouplée dans la partie inférieure d'une autre bouteille par la double action des goulots mâle et femelle afin de faire contacter les surface d'appui respectives. La bouteille présente à sa périphérie au moins une ouverture femelle longitudinale permettant d'insérer une tige intermédiaire, ladite tige servant de lien entre deux bouteilles disposées l'une à côté de l'autre ou d'une bouteille et d'un autre élément de construction à ouverture femelle longitudinale.

Ces deux demandes de brevet sont basées sur l'assemblage de bouteilles d'une forme particulière afin de réaliser un ouvrage rigide avec une rigidité accrue et une étanchéité améliorée le cas échéant.

WO2016016706 décrit un système de construction comportant un jeu d'éléments accessoires et un jeu de corps de forme allongée destiné à réaliser une construction par l'assemblage d'une pluralité desdits corps avec des éléments accessoires. Le corps de forme allongée comporte une face avant et une face arrière, planes et opposées, une face supérieure et une face inférieure, planes et opposées, et deux faces latérales opposées. Au moins une desdites deux faces latérales présente une partie en retrait notamment une incurvation sur sa partie centrale. Chaque corps est assemblable avec un autre corps, par leurs faces latérales entre elles et/ou par l'assemblage d'une face inférieure d'un corps sur la face supérieure d'un autre corps et/ou par l'assemblage d'une face latérale d'un corps avec la face avant ou arrière d'un autre corps. Les éléments accessoires sont des pièces allongées qui viennent s'insérer entre et en contact avec les parties en retrait des deux corps allongés assemblés face à face, et qui s'étendent sur toute ou sur une partie substantielle de la hauteur des corps allongés. Les pièces allongées définissent à elles seules en cas de pièces allongées creuse ou par coopération de ces pièces allongées avec des parties en retrait en face à face des corps allongés, un espace central situé entre et au milieu des parties en retrait des corps allongés. Les pièces allongées définissent en outre des espaces latéraux entre les faces latérales des parties en retrait des corps allongés de part et d'autre des pièces allongées.

DE 20 2010 002699 U1 divulgue un système de construction pour un module d'une habitation dont les éléments principaux sont en bois, le système de construction comportant - un jeu de poutres de forme rectiligne allongée de deux types (type 1 et type 2), les poutres comportant à chaque extrémité une ouverture de passage transversale agencée de manière à ce que l'ouverture de passage transversale d'une poutre de type 1 vient s'emboiter avec l'ouverture de passage transversale d'une poutre de type 2 lorsque les deux poutres sont assemblées bout à bout à angle droit laissant une ouverture de passage entre les deux extrémités des poutres, de manière à ce que deux poutres de type 1 puissent s'assembler avec deux poutres de type 2 pour former un cadre rectangulaire,
- un jeu d'éléments d'assemblage au coin, chaque élément d'assemblage comportant un corps destiné à traverser l'ouverture de passage transversale des poutres de type 1 et 2.

Par ailleurs on connait des systèmes de construction composés de pièces en matières plastiques mais qui sont destinés à la construction de modèles réduits.

La présente invention permet de réaliser un système de construction pour un module d'une habitation dont les éléments principaux sont en matière plastique notamment en matière plastique recyclée permettant une construction robuste de manière très simple et très rapide.

Conformément à l'invention, ce but atteint grâce à un système de construction pour un module d'une habitation dont les éléments principaux sont en matière plastique, le système de construction comportant :
- Un jeu de poutres profilés creux de forme rectiligne allongée de type 1 et de type 2, les poutres comportant à chaque extrémité une ouverture de passage transversale agencée de manière à ce que l'ouverture de passage transversale d'une poutre de type 1 vient s'emboiter avec l'ouverture de passage transversale d'une poutre de type 2 lorsque les deux poutres sont assemblées bout à bout à angle droit laissant une ouverture de passage entre les deux extrémités des poutres, de manière à ce que deux poutres de type 1 puissent s'assembler avec deux poutres de type 2 pour former un cadre rectangulaire,
- Un jeu d'éléments d'assemblage au coin, chaque élément d'assemblage comportant un corps destiné à traverser l'ouverture de passage transversale des poutres de type 1 et 2,
- Un jeu de plaques assemblables entre deux poutres de type 1 assemblées ou deux poutres de type 2 assemblées en cadre rectangulaire, et
- Un jeu de poteaux de section creuse rectangulaire dont les extrémités creuses viennent s'emboiter sur un élément d'assemblage au coin d'un cadre rectangulaire formé de poutres de type 1 et de type 2, de manière à former une ossature en trois dimensions.

Les poteaux comportent des rainures ou rails longitudinaux sur deux surfaces adjacentes, pour recevoir d'autres plaques entre les poteaux lors de l'assemblage.

Chaque poutre profilé creux comportant le long d'une surface supérieure des rainures ou des rails espacés destinés à recevoir lesdites autres plaques.

Dans une forme d'exécution, les poutres de type 1 comportent une section carrée fermée et les poutres de type 2 comportant une section en U destinée à recevoir lesdites plaques.

Dans une forme d'exécution, chaque module de construction peut être assemblé avec un autre module, chaque module mesurant entre 2.5m et 3.5 m de longueur de côté et entre 2,2m et 2.8m de hauteur.

Dans une forme d'exécution préférentielle, les plaques et les autres plaques comportent des zones extractibles pour créer des ouvertures.

Dans une forme d'exécution, les plaques sont agencées pour coulisser dans les poutres de type 2 et entre les rainures ou les rails des poutres de type 1 et des poteaux.

Pour une meilleure isolation thermique et acoustique des modules d'habitation, les autres plaques comportent des compartiments pour agencer des éléments d'isolation, et les plaques comportent un logement sur une des faces larges pour agencer des éléments d'isolation, le logement étant refermable par un couvercle étanche.

Pour supporter des charges plus importantes, les poutres comportent à chaque extrémité une partie amovible en un matériau plus rigide que les poutres, par exemple en métal.

De préférence et par soucis écologique, le système de construction est réalisé à partir de matières plastiques recyclées.

Pour plus de rigidité, chaque poutre et chaque plaque est remplie d'une substance destiné à solidifier sa structure, par exemple une terre mélangée à une résine durcissante, du ciment, béton, pisé ou toute autre substance durcissante, voire une matière poreuse telle qu'une mousse rigide.

Selon la présente invention, il est possible de réaliser un assemblage d'un module d'habitation construit à partir d'un système de construction comportant une ossature en trois dimensions assemblée à partir de poutres de type 1 et type 2 formant des cadres rectangulaires horizontaux et des poteaux verticaux assemblés aux coins des cadres rectangulaires, des plaques horizontales entre les poutres de type 1 et type 2, et d'autres plaques verticales entre les poteaux et superposées aux poutres profilés.

Selon cette forme d'exécution, lorsque les éléments d'assemblage au coin sont scellés au sol, un second module de construction peut être accouplé à un premier module, les autres plaques communes entre les deux modules étant optionnellement montées.

Pour plus de robustesse de l'assemblage chaque poutre comporte une extrémité amovible en matière métallique.

Dans une forme d'exécution préférentielle, la partie supérieure du module d'une habitation est étanche, soit par un montage des plaques soit par le positionnement d'une bâche sur laquelle peut être appliquée une résine polymérisante rendant ladite bâche rigide et imperméable.

Grâce à cet assemblage, il est possible de réaliser un élément d'un immeuble, entre autre, un garage, une maison.

Les caractéristiques de l'invention apparaitront plus clairement à la lecture de la description suivante de plusieurs formes d'exécutions données uniquement à titre d'exemple, nullement limitative en se référant aux figures schématiques, dans lesquelles :
- La figure 1 représente une vue en perspective de deux poutres profilés creux, l'un de de type 1 et l'autre de de type 2 ;
- La figure 2 représente une vue en perspective d'une poutre de type 1 et de deux poutres de type 2 disposés pour être assemblées ensemble ;
- La figure 3 représente une vue en perspective d'une poutre de type 1 et de deux poutres de type 2 assemblés par leurs extrémités et prêts à recevoir des éléments d'assemblage au coin destinés à traverser une ouverture de passage transversale des poutres de type 1 et 2;
- La figure 4 représente une vue en perspective d'une poutre de type 1 et de deux poutres de type 2 assemblés par leurs extrémités et des éléments d'assemblage au coin traversant une ouverture de passage transversale des poutres de type 1 et 2, de manière à ce que des plaques puissent coulisser dans et entre les poutres de type 2 ;
- La figure 5 représente une vue en perspective de l'assemblage de poutres de la figure 4 et de six plaques agencées dans et entre les poutres de type 2, ainsi qu'une poutre de type 1 destinée à s'assembler avec les deux poutres de type 2 ;
- La figure 6 représente une vue en perspective de l'assemblage de deux poutres de type 1 et de deux poutres de type 2 et de six plaques agencées dans et entre les poutres de type 2 et entre les deux poutres de type 1 ;
- La figure 7 représente l'assemblage de la figure 6 dans lequel des matériaux isolants sont agencés dans une première plaque et prêts à être agencés dans chacune des cinq autres plaques ;
- La figure 8 représente l'assemblage de la figure 7 dans lequel des matériaux isolants sont agencés dans chacune des six plaques et des couvercles agencés pour couvrir chaque plaque comportant un matériau isolant ;
- La figure 9 représente l'assemblage de la figure 8 lorsque les couvercles sont complètement posés sur les plaques ;
- La figure 10 représente l'assemblage de la figure 9 sur lequel un poteau creux est disposé à un angle de l'assemblage de forme rectangulaire, le poteau étant prêt à recevoir un renfort ;
- La figure 11 représente l'assemblage de la figure 10 ainsi que des autres plaques et des matériaux isolants prêts à être disposés dans des rails agencés sur la poutre et sur le poteau ;
- La figure 12 représente l'assemblage de la figure 11 avec cinq autres plaques et un deuxième poteau et son renfort prêt à être installés ;
- La figure 13 représente l'assemblage de la figure 12 avec une deuxième cloison de cinq autres parois prêtes à être installées ;
- La figure 14 représente l'assemblage de la figure 13 avec une troisième et une quatrième cloisons de cinq autres parois et un quatrième poteau et son renfort prêt à être installés ;
- La figure 15 représente l'assemblage de la figure 14 avec une poutre de type 1 et deux poutres de type 2 disposées pour être assemblées ensemble au-dessus dudit assemblage ;
- La figure 16 représente une poutre de type 1 et deux poutres de type 2 assemblés, au-dessus dudit ensemble de la figure 15, par leurs extrémités et des éléments d'assemblage au coin traversant une ouverture de passage transversale des poutres de type 1 et 2 de manière à ce que six plaques puissent coulisser dans et entre les poutres de type 2 ;
- La figure 17 représente l'assemblage de la figure 16 lorsque les six plaques ont coulissé dans et entre les poutres de type 2 ainsi que des matériaux d'isolation prêts à être disposés dans des logements agencés dans chacune des six plaques ;
- La figure 18 représente l'assemblage de la figure 17 lorsque les matériaux d'isolation sont disposés dans des logements agencés dans chacune des six plaques et des couvercles agencés pour couvrir chaque plaque comportant un matériau isolant ;
- La figure 19 représente l'assemblage de la figure 18 complètement assemblé ;
- La figure 20 représente une partie de poutre de type 2 dans laquelle l'extrémité est composée d'une partie en métal prête à s'insérer dans des ouvertures agencées dans une poutre de type 2 ;
- La figure 21 représente deux modules d'habitation superposées d'un sur l'autre et dotés de fenêtres et d'une porte selon la présente invention ;
- La figure 22 représente une vue en coupe longitudinale d'une autre paroi ; et
- La figure 23 représente une ossature réalisée à l'aide de poutre de type 1 et de type 2 ainsi que des éléments d'assemblage au coin.

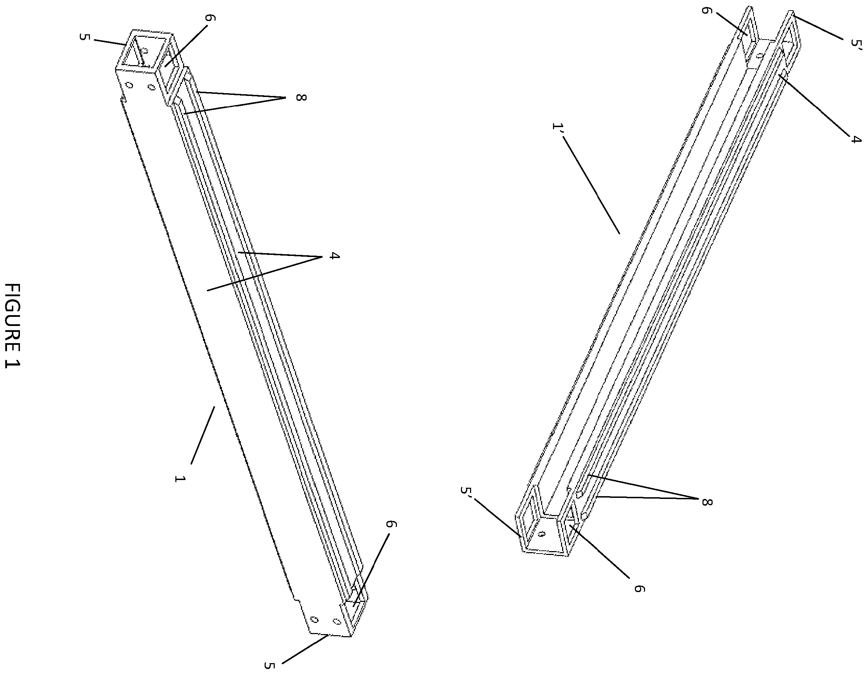

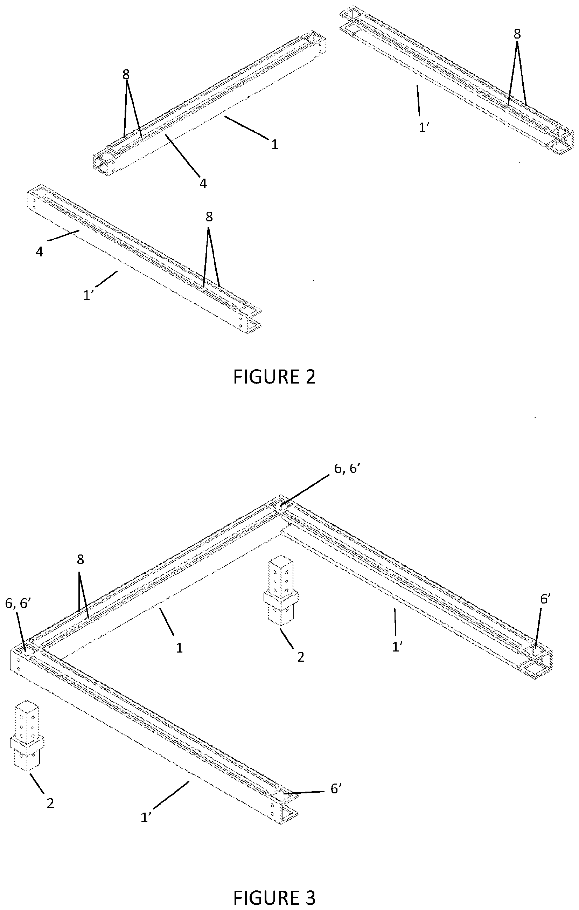

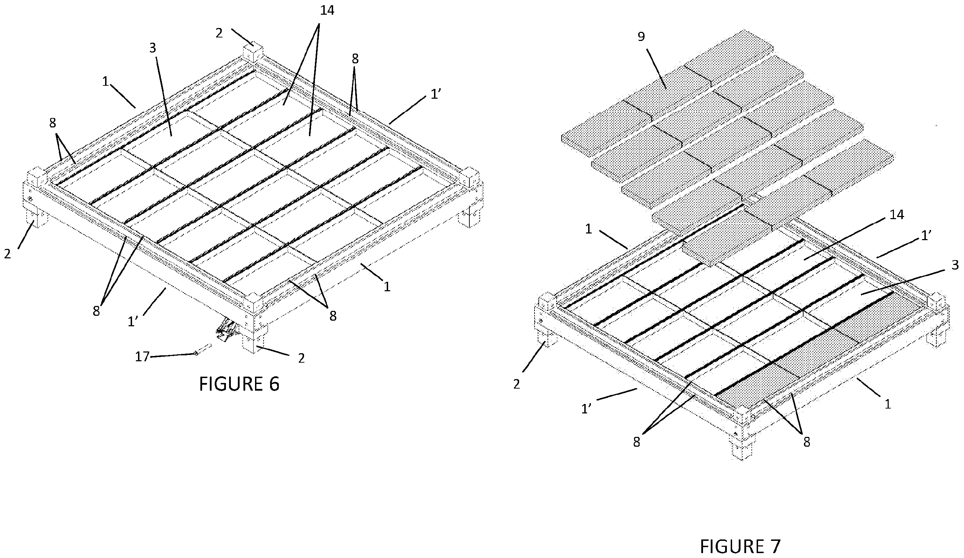

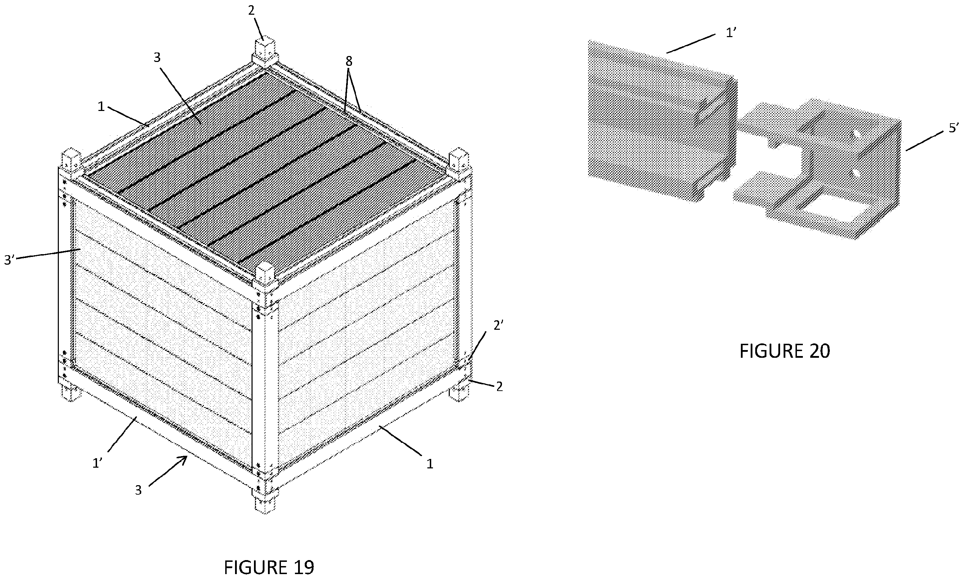

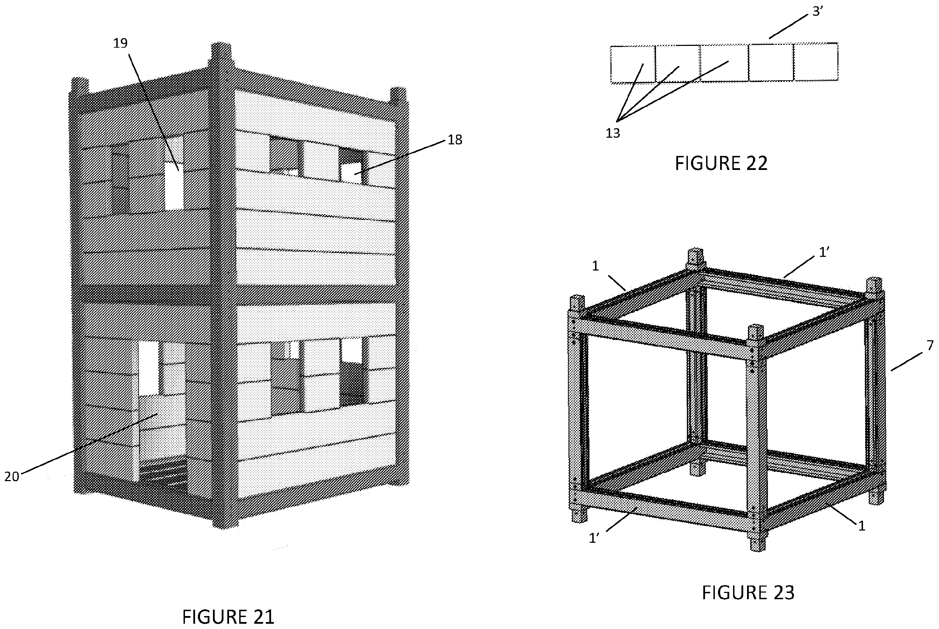

Un module d'une habitation tel qu'illustré à la figure 19 ou la figure 21 dont les éléments principaux sont en matière plastique comporte un jeu de poutres 1, 1' (voir figure 1 et figure 2) profilés creux de forme rectiligne allongée de type 1 et de type 2. Les poutres 1 de type 1 comportent une section carrée fermée et les poutres 1' de type 2 comportent une section en U destinée à recevoir des plaques 3. Comme illustré aux figures 1 et 2, les poutres 1, 1' comportent à chaque extrémité 5, 5' une ouverture de passage transversale 6, 6' agencée de manière à ce que l'ouverture de passage transversale 6 d'une poutre 1 de type 1 vient s'emboiter avec l'ouverture de passage transversale 6' d'une poutre 1' de type 2 lorsque les deux poutres 1, 1' sont assemblées bout à bout à angle droit laissant une ouverture de passage 6, 6' entre les deux extrémités 5, 5' des poutres 1, 1'. De cette manière, deux poutres 1 de type 1 peuvent s'assembler avec deux poutres 1' de type 2 pour former un cadre rectangulaire comme cela est illustré notamment à la figure 6.

Comme illustré à la figure 3, deux éléments d'assemblage au coin 2 sont agencés pour traverser l'ouverture de passage transversale 6, 6' des poutres 1, 1' de type 1 et 2. Les éléments d'assemblage au coin comportent une première pièce rectangulaire comportant des trous pour recevoir des vis ainsi qu'un collier de maintien de forme rectangulaire qui sert à supporter la structure lorsque la première pièce d'assemblage 2 est insérée dans l'ouverture transversale. Comme illustré à la figure 20, et pour plus de robustesse, les poutres 1, 1' comportent à chaque extrémité 5, 5' une partie amovible 15 en métal.

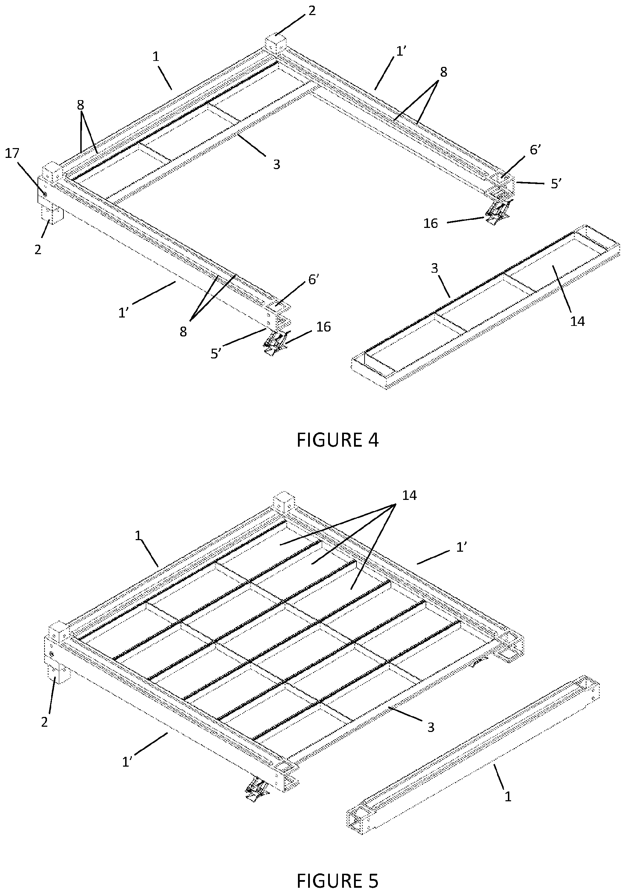

Comme illustré à la figure 4, une poutre 1 de type 1 et de deux poutres 1' de type 2 sont assemblées par leurs extrémités 5, 5'. Deux éléments d'assemblage au coin 2 traversent une ouverture de passage transversale 6, 6' des poutres 1, 1' de type 1 et 2 de manière à ce que des plaques 3 puissent coulisser dans et entre les poutres 1' de type 2. Les éléments d'assemblage au coin 2 sont maintenus en position avec les poutres 1, 1' au moyen de vis 17. D'ailleurs, dans cet exemple, l'assemblage de poutres 1, 1' reposent d'un côté sur les deux éléments d'assemblage au coin 2 et de l'autre côté sur des moyens de levage/support 16 tel qu'un cric. Lorsque six plaques 3 sont agencées dans et entre les poutres 1' de type 2, une poutre de type 1 est destinée à s'assembler avec les deux poutres 1' de type 2 (voir figure 5). Ainsi, le jeu de plaques 3 assemblées entre deux poutres 1 de type 1 assemblées ou deux poutres 1' de type 2 assemblées forment en cadre rectangulaire tel qu'illustré à la figure 6.

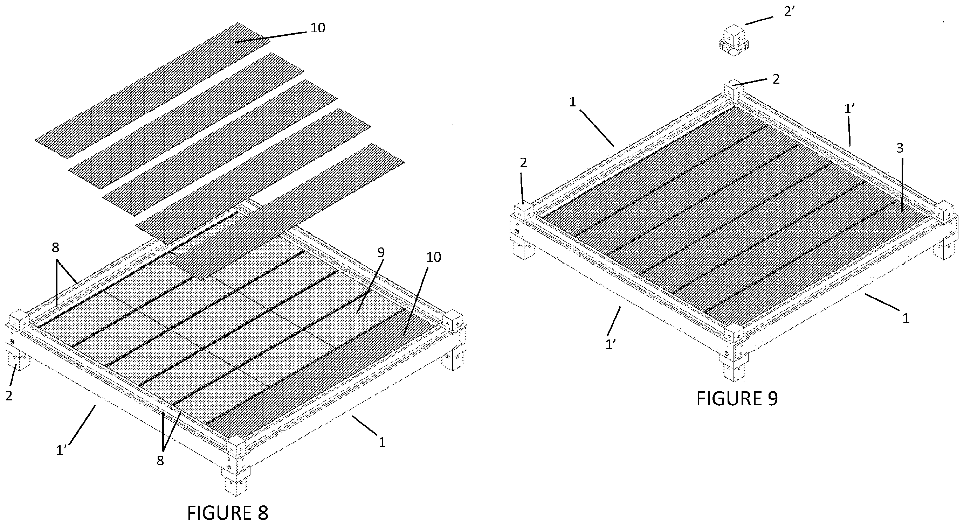

Comme illustré à la figure 7, une fois cette première structure rectangulaire assemblée des matériaux isolants 9 sont agencés dans des logements 14 de chacune des six plaques 3. Ensuite, des couvercles 10 sont disposés sur chacune des six plaques 3 comme illustré aux figures 8 et 9. Les éléments d'assemblage au coin comportent une seconde pièce rectangulaire 2' comportant des trous pour recevoir des vis ainsi qu'un collier de maintien de forme rectangulaire qui sert à supporter un poteau. La seconde pièce rectangulaire 2' est creuse d'un côté pour s'emboiter avec la première pièce de l'élément d'assemblage au coin 2.

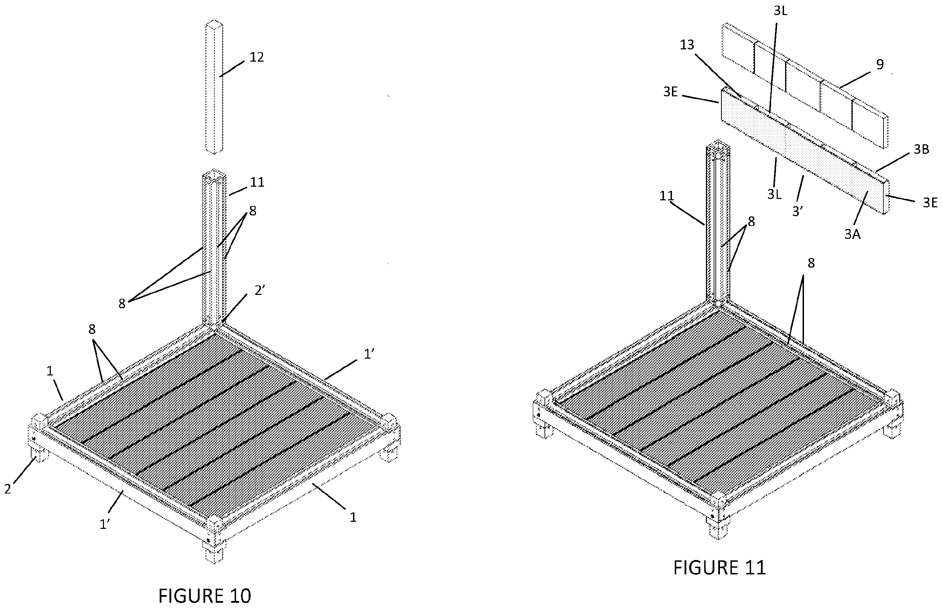

Comme illustré à la figure 10, lorsque ce cadre rectangulaire formé de poutres 1, 1' de type 1 et de type 2 est assemblé, un élément d'assemblage au coin 2' reçoit des extrémités creuses d'un poteau 11 de section creuse rectangulaire d'un cadre rectangulaire formé de poutres 1, 1' de type 1 et de type 2, de manière à former une ossature en trois dimensions. Les poteaux 11 comportent des rainures ou rails longitudinaux 8 sur deux surfaces adjacentes, pour recevoir d'autres plaques 3' entre les poteaux 11 lors de l'assemblage. Dans cet exemple, un renfort 12 est inséré dans le poteau 11 pour le rendre plus robuste.

Chaque poutre 1, 1', le long d'une surface supérieure, et chaque poteau 11, comportent des rails 8 espacés destinés à recevoir lesdites autres plaques 3'. Dans l'exemple illustré les autres plaques 3' sont plus minces que les plaques 3 mais bien sur elles peuvent avoir la même dimension.

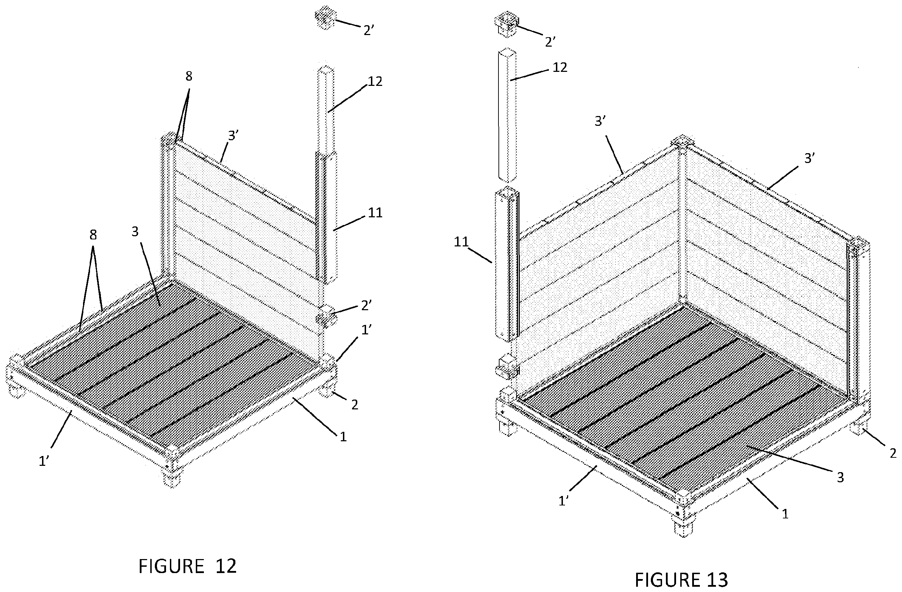

Comme illustré aux figures 11 et 12, les autres plaques 3' sont agencées pour coulisser entre les rails 8 des poutres 1 de type 1 et de type 2 et des poteaux 11. Les autres plaques 3' comportent des compartiments 13 pour agencer des éléments d'isolation 9. Comme cela est visible en particulier à la figure 11, l'autre plaque 3' comporte deux faces larges opposées 3A, 3B, s'étendant entre deux faces latérales 3L et des faces d'extrémité 3E. Les autres plaques 3' sont agencées pour constituer des parois de ladite ossature 7.

Comme illustré à la figure 12, une paroi complète est montée par l'assemblage de cinq autres plaques 3' disposées dans des rails 8 agencés sur la poutre 1' et sur les poteaux 11. Dans chacun des poteaux 11, un renfort 12 sert à solidifier la structure.

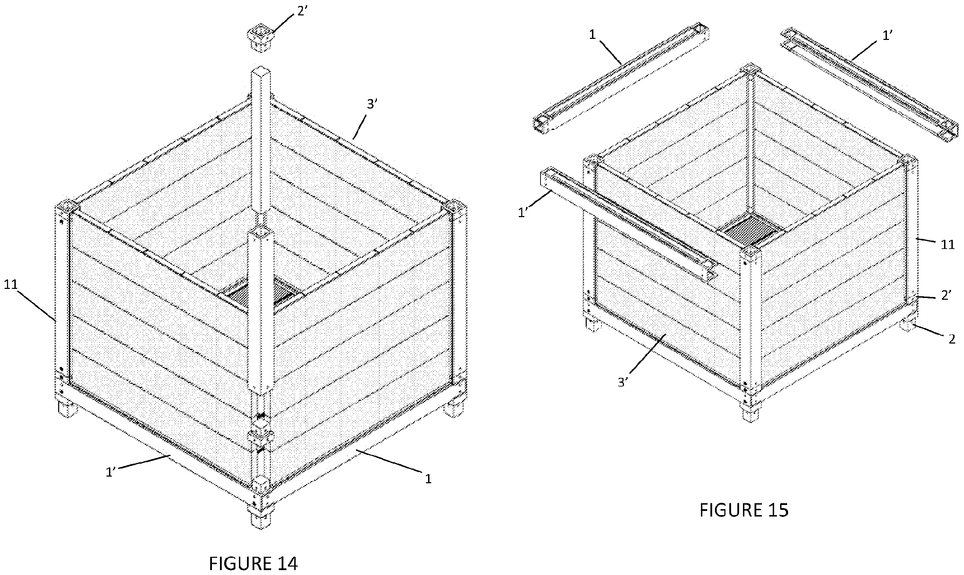

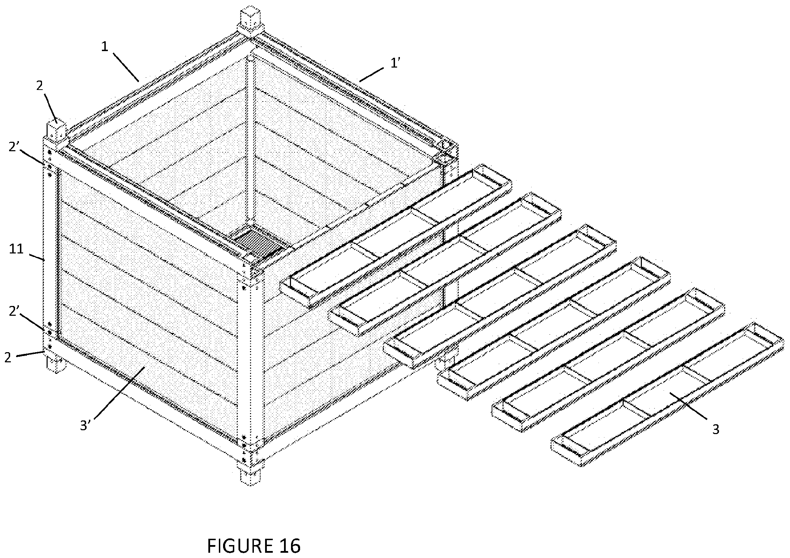

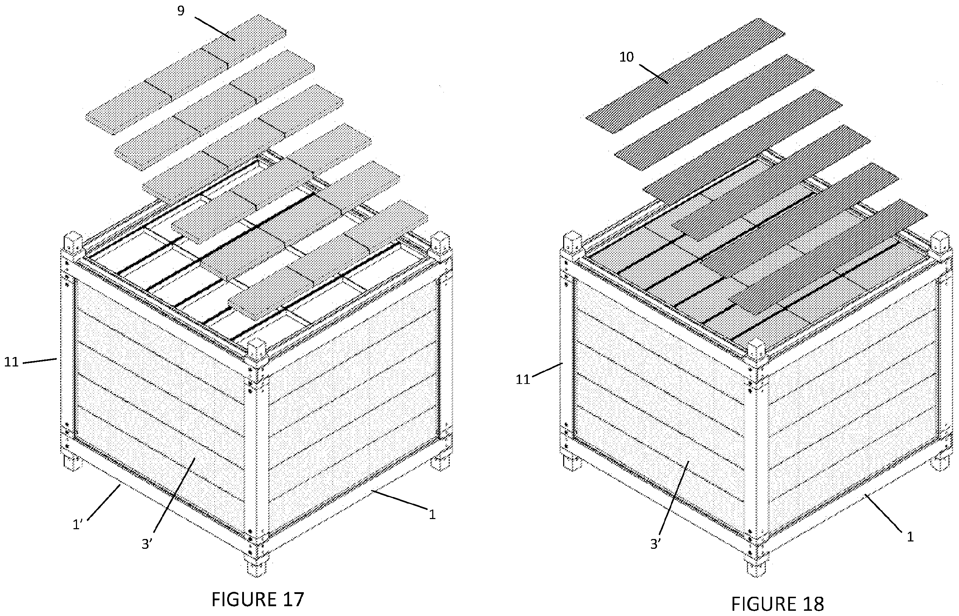

Les figures 13 à 19 illustrent les différentes étapes pour la construction d'un module d'habitation selon la présente invention. Les parois sont montées les unes après les autres selon le même principe que la première paroi de la figure 12 grâce aux autres plaques 3', aux poteaux 11, leurs renforts 12, les éléments d'assemblage au coin 2, 2' et les éléments d'isolation. La structure faisant office de plafond est assemblée selon le même principe que la partie au sol grâce aux poutres 1, 1', des éléments d'assemblage au coin 2, des plaques 3, des éléments d'isolation 9, et des couvercles 10.

Comme illustré à la figure 19, lorsque les éléments d'assemblages au coin 2 sont scellés au sol, un module de construction assemblé au moyen d'un jeu de poutres 1, 1', d'un jeu d'éléments d'assemblage au coin 2, 2' et de plaques 3, 3' présente l'avantage d'avoir les autres plaques 3' qui résistent au vent jusqu'à 160kg/m2, les plaques 3 inférieures qui supportent des charges au sol jusqu'à 224 kg/m2 et les plaques 3 supérieures qui supportent des charges sur la partie supérieure du module jusqu'à 107 kg/m2. Le module tel qu'illustré mesure 3 m de longueur de côté et entre 2,5m de hauteur.

Pour pouvoir supporter de telles conditions et de telles charges, chaque poutre 1, 1' pèse entre 50 et 150kg, chaque plaque 3, 3' pèse entre 40 kg et 120 kg et chaque élément d'assemblage au coin 2, 2' pèse entre 5kg et 30kg.

Il est évident que le module de construction tel qu'illustré à la figure 19 nécessite des ouvertures pour pouvoir être utilisé. Ainsi, les plaques 3 et les autres plaques 3' comportent des zones extractibles pour créer des ouvertures.

Dans cet exemple, les ouvertures dans les autres parois 3' sont créées en retirant, par exemple par découpage ou sciage, un compartiment 13 parmi les cinq compartiments de chacune des autres parois 3' comme cela est illustré à la figure 23 où est représentée une vue en coupe longitudinale d'une autre paroi 3' avec les compartiments.

Come illustré à la figure 21, deux modules de construction sont superposés l'un sur l'autre. Dans cet exemple, lorsque les éléments d'assemblage au coin 2, 2' du premier module de construction sont scellés au sol, les autres plaques 3' résistent au vent jusqu'à 182kg/m2, les plaques inférieures 3 supportent des charges au sol jusqu'à 224 kg/m2 et les plaques supérieures 3 du second module supportent des charges sur la partie supérieure dudit second module jusqu'à 107 kg/m2.

Le module d'habitation du haut comporte quatre ouvertures faisant office de fenêtre. Deux petites fenêtres 18 sont créées en découpant deux compartiments sur une autre plaque 3'. Deux grandes fenêtres 19 sont créées en découpant deux compartiments sur deux autres plaques 3' montées l'une sur l'autre. Le module d'habitation du bas comporte une grande ouverture 20 servant de porte et deux petites ouvertures 18 servant de fenêtre. La porte 20 est créée en découpant deux compartiments 13 adjacents sur quatre autres plaques montées l'une au-dessus de l'autre. Dans cet exemple, même si non visible, les plaques 3 communes entre le module du bas et le module du haut comportent également des ouvertures entre les deux modules. Dans une autre version non illustrée, un escalier extérieur peut permettre l'accès au module d'habitation du haut.

Dans un autre exemple non illustré, lorsque les éléments d'assemblage au coin 2, 2' sont scellés au sol et qu'un second module de construction est accouplé à un premier module, par une partie latérale, les autres plaques 3' communes entre les deux modules sont optionnellement montées moyennant une forme modifiée des poteaux 11.

Pour plus de confort, si jusqu'à présent il a été mentionné que les compartiments 13 et les logements 14 des plaques 3, 3' permettent d'intégrer une matière isolante, il est également envisagé d'intégrer des câbles électriques et de la tuyauterie. La tuyauterie peut aussi bien servir pour transporter de l'eau jusqu'à un point d'eau disposé dans ladite habitation que pour évacuer les eaux usées à l'extérieur de ladite habitation. En effet, les plaques 3, 3' comportent des compartiments 13 et des logements 14 d'une épaisseur de plusieurs centimètres, par exemple 15 centimètres minimum permettant ainsi d'intégrer la matière isolante d'une part et les tuyaux et les câbles d'autre part.

La partie supérieure du module d'une habitation est toujours étanche soit par un montage particulier des plaques 3, 3' soit, dans un exemple non illustré, par le positionnement d'une bâche sur laquelle peut être appliquée une résine polymérisante rendant ladite bâche rigide et imperméable. Une telle structure est réalisée en se servant des poutres et des poteaux. Chaque poteau et poutre comporte des trous, notamment comme ceux où sont insérées des vis, dans lesquels viennent s'enquiller des tubes de section correspondant aux trous. Ces tubes sont de longueur suffisamment grande pour constituer une structure qui déborderait du module d'habitation de manière suffisante pour régler la pente d'un toit ou un débord de toiture en fonction du lieu géographique dudit module d'habitation. Ainsi, une fois cette structure pour le toit réalisée, une ou plusieurs bâches, éventuellement solaire, peut être disposée et tendue comme on tend par exemple un chapiteau.

Une fois la bâche tendue et mise en forme il faut procéder à l'application d'une résine transparente ou colorée, par exemple au pinceau ou au pistolet, sur la partie intérieure ou extérieure de la bâche. On obtient alors après polymérisation une coque de résine fine mais rigide et résistante et facilement réparable.

Dans une autre version non illustrée, la partie supérieure du module d'habitation peut être végétalisée.

Un module d'habitation selon la présente invention présente l'avantage d'être facile et rapide à assembler et est tellement robuste qu'il respecte les normes sur les structures porteuses telles que la norme EN1991.

Dans toutes les exécutions, il faut comprendre par matière plastique tout matériau qui peut être recyclé (PEHD, PEBD, PP, PET, PS, ABS...). De préférence, les pièces plastiques récupérées peuvent être broyées et déchiquetées. Une fois déchiqueté, le plastique est lavé puis séché avant d'être préparé pour une opération d'extrusion. Les polymères sont fondus par la chaleur et une pâte uniforme est alors obtenue. Après une succession d'étapes conventionnelles, un grain est obtenu. Les granulés sont ensuite extraits de l'extrudeuse. Enfin, les grains pourront servir pour la fabrication des éléments de construction selon la présente invention.

### Légende

- 1 :: poutre type 1
- 1' :: poutre type 2
- 2, 2' :: éléments d'assemblage au coin
- 3 :: plaque
- 3' :: autre plaque
- 3A :: face avant autre plaque
- 3B :: face arrière autre plaque
- 3L :: faces latérales autre plaque
- 3E :: faces d'extrémité autre plaque
- 4 :: faces latérales poutres
- 5, 5' :: faces d'extrémité poutres
- 6 :: ouverture de passage poutres
- 7 :: ossature
- 8 :: rails, rainures
- 9 :: isolant
- 10 :: couvercle
- 11 :: poteau
- 12 :: renfort poteau
- 13 :: compartiment
- 14 :: logement
- 15 :: partie amovible poutres
- 16 :: moyen de levage
- 17 :: vis
- 18 :: petite fenêtre
- 19 :: grande fenêtre
- 20 :: porte

## Revendications

1. Système de construction pour un module d'une habitation dont les éléments principaux sont en matière plastique, le système de construction comportant :
- Un jeu de poutres (1, 1') profilés creux de forme rectiligne allongée de type 1 et de type 2, les poutres (1, 1') comportant à chaque extrémité (5, 5') une ouverture de passage transversale (6, 6') agencée de manière à ce que l'ouverture de passage transversale (6) d'une poutre (1) de type 1 vient s'emboiter avec l'ouverture de passage transversale (6') d'une poutre (1') de type 2 lorsque les deux poutres (1, 1') sont assemblées bout à bout à angle droit laissant une ouverture de passage (6, 6') entre les deux extrémités (5, 5') des poutres (1, 1'), de manière à ce que deux poutres (1) de type 1 puissent s'assembler avec deux poutres (1') de type 2 pour former un cadre rectangulaire,
- Un jeu d'éléments d'assemblage au coin (2, 2'), chaque élément d'assemblage (2, 2') comportant un corps destiné à traverser l'ouverture de passage transversale (6, 6') des poutres (1, 1') de type 1 et 2,
- Un jeu de plaques (3) assemblables entre deux poutres (1) de type 1 assemblées ou deux poutres (1') de type 2 assemblées en cadre rectangulaire, et
- Un jeu de poteaux (11) de section creuse rectangulaire dont les extrémités creuses viennent s'emboiter sur un élément d'assemblage au coin (2, 2') d'un cadre rectangulaire formé de poutres (1, 1') de type 1 et de type 2, de manière à former une ossature en trois dimensions,
Les poteaux (11) comportent des rainures ou rails longitudinaux (8) sur deux surfaces adjacentes, pour recevoir d'autres plaques (3') entre les poteaux (11) lors de l'assemblage,
Chaque poutre profilé (1, 1') creux comportant le long d'une surface supérieure des rainures ou des rails (8) espacés destinés à recevoir lesdites autres plaques (3').

2. Système de construction selon la revendication 1, dans lequel les poutres (1) de type 1 comportent une section carrée fermée et les poutres (1') de type 2 comportant une section en U destinée à recevoir lesdites plaques (3).

3. Système de construction selon la revendication 1 ou 2, dans lequel chaque module de construction peut être assemblé avec un autre module, chaque module mesurant entre 2.5m et 3.5 m de longueur de côté et entre 2,2m et 2.8m de hauteur.

4. Système de construction selon l'une des revendications précédentes, dans lequel les plaques (3) et les autres plaques (3') comportent des zones extractibles pour créer des ouvertures.

5. Système de construction selon l'une des revendications précédentes, dans lequel les plaques (3, 3') sont agencées pour coulisser dans les poutres (1') de type 2 et entre les rainures ou les rails (8) des poutres (1) de type 1 et des poteaux (11).

6. Système de construction selon l'une des revendications précédentes, dans lequel les autres plaques (3') comportent des compartiments (13) pour agencer des éléments d'isolation (9), et les plaques (3) comportent un logement (14) sur une des faces larges (3A, 3B) pour agencer des éléments d'isolation (9), le logement (14) étant refermable par un couvercle étanche (10).

7. Système de construction selon l'une des revendications précédentes, dans lequel les poutres (1, 1') comportent à chaque extrémité (5, 5') une partie amovible (15) en un matériau plus rigide que les poutres (1, 1'), par exemple en métal.

8. Système de construction selon l'une des revendications précédentes, dans lequel chaque poutre (1, 1') pèse entre 50 et 150kg, chaque plaque (3, 3') pèse entre 40 kg et 120 kg et chaque élément d'assemblage au coin (2, 2') pèse entre 5kg et 30kg.

9. Système de construction selon l'une des revendications précédentes, dans lequel le système de construction est réalisé à partir de matières plastiques recyclées.

10. Système de construction selon l'une des revendications précédentes, dans lequel chaque poutre (1, 1'), et chaque plaque (3, 3') est remplie d'une substance destiné à solidifier sa structure, par exemple une terre mélangée à une résine durcissante, du ciment, béton, pisé ou toute autre substance durcissante, voire une matière poreuse telle qu'une mousse rigide.

11. Assemblage d'un module d'habitation construit à partir d'un système de construction selon l'une des revendications précédentes, comportant une ossature en trois dimensions assemblée à partir de poutres (1, 1') de type 1 et type 2 formant de cadres rectangulaires horizontaux et des poteaux (11) verticaux assemblés aux coins des cadres rectangulaires, des plaques (3) horizontales entre les poutres de type 1 et type 2, et d'autres plaques (3') verticales entre les poteaux (11) et superposées aux poutres profilés (1,1').

12. Assemblage selon la revendication 11 d'un module de construction au moyen d'un jeu de poutres (1, 1'), d'un jeu d'éléments d'assemblage au coin (2, 2') et de plaques (3, 3') selon l'une des revendications précédentes, **caractérisé en ce que** lorsque les éléments d'assemblages au coin (2, 2') sont scellés au sol, les autres plaques (3') résistent au vent jusqu'à 160kg/m2, les plaques inférieures (3) supportent des charges au sol jusqu'à 224 kg/m2 et les plaques supérieures (3) supportent des charges sur la partie supérieure du module jusqu'à 107 kg/m2.

13. Assemblage selon la revendication 11 ou 12, dans lequel lorsque les éléments d'assemblage au coin (2, 2') sont scellés au sol, un second module de construction peut être accouplé à un premier module, les autres plaques (3') communes entre les deux modules étant optionnellement montées.

14. Assemblage de deux modules de construction superposés selon la revendication 13, un second module de construction étant agencé sur un premier module de construction, les éléments d'assemblage au coin (2, 2') du premier modules de construction étant scellés au sol, les autres plaques (3') résistent au vent jusqu'à 182kg/m2, les plaques inférieures (3) supportent des charges au sol jusqu'à 224 kg/m2 et les plaques supérieures (3) du second module supportent des charges sur la partie supérieure dudit second module jusqu'à 107 kg/m2.

15. Assemblage selon l'une des revendications 13 ou 14, dans lequel chaque poutre (1, 1') comporte une extrémité (5, 5') amovible en matière métallique.

16. Assemblage selon l'une des revendications 12 à 15, dans lequel la partie supérieure du module d'une habitation est étanche, soit par un montage des plaques (3, 3') soit par le positionnement d'une bâche sur laquelle peut être appliquée une résine polymérisante rendant ladite bâche rigide et imperméable.

17. Assemblage selon l'une des revendications 12 à 16 qui constitue un élément d'un immeuble, entre autre, un garage, une maison.

## Patentansprüche

1. Konstruktionssystem für ein Modul einer Behausung, deren Hauptelemente aus Kunststoff sind, das Konstruktionssystem aufweisend:
- Einen Satz Profil-Hohlbalken (1, 1') mit rechteckiger länglicher Form vom Typ 1 und 2, wobei die Balken (1, 1') an jedem Ende (5, 5') eine Querdurchgangsöffnung (6, 6') aufweisen, die so angeordnet ist, dass die Querdurchgangsöffnung (6) eines Balkens (1) vom Typ 1 mit der Querdurchgangsöffnung (6') eines Balkens (1') vom Typ 2 in Passeingriff steht, wenn die zwei Balken (1, 1') Ende an Ende im rechten Winkel zusammengefügt sind, wobei eine Durchgangsöffnung (6, 6') zwischen den zwei Enden (5, 5') der Balken (1, 1') gelassen wird, so dass zwei Balken (1) vom Typ 1 mit zwei Balken (1') vom Typ 2 zusammengefügt werden können, um einen rechteckigen Rahmen zu bilden,
- Einen Satz Eckfügeelemente (2, 2'), wobei jedes Fügeelement (2, 2') einen Körper aufweist, der dazu bestimmt ist, die Querdurchgangsöffnung (6, 6') der Balken (1, 1') vom Typ 1 und 2 zu durchqueren,
- Einen Satz Platten (3), die zwischen zwei zusammengefügten Balken (1) vom Typ 1, oder zwei Balken (1') vom Typ 2, die zu einem rechteckigen Rahmen zusammengefügt sind, zusammengefügt werden können, und
- Einen Satz Pfosten (11) mit rechteckigem hohlen Querschnitt, deren hohle Enden mit einem Eckfügeelement (2, 2') eines rechteckigen Rahmens in Passeingriff stehen, der von Balken (1, 1') vom Typ 1 und 2 gebildet ist, so dass ein dreidimensionales Gerüst gebildet wird, Wobei die Pfosten (11) Nuten oder Schienen in Längsrichtung (8) auf zwei angrenzenden Flächen aufweisen, um beim Zusammenfügen andere Platten (3') zwischen den Pfosten (11) aufzunehmen,
Wobei jeder Profil-Hohlbalken (1, 1') entlang einer oberen Fläche beabstandete Nuten oder Schienen (8) aufweist, die dazu bestimmt sind, die anderen Platten (3') aufzunehmen.

2. Konstruktionssystem nach Anspruch 1, wobei die Balken (1) vom Typ 1 einen geschlossenen quadratischen Querschnitt aufweisen und die Rahmen (1') vom Typ 2 einen U-förmigen Querschnitt aufweisen, der dazu bestimmt ist, die Platten (3) aufzunehmen.

3. Konstruktionssystem nach Anspruch 1 oder 2, wobei jedes Konstruktionsmodul mit einem anderen Modul zusammengefügt werden kann, wobei jedes Modul zwischen 2,5 m und 3,5 m in der Seitenlänge und zwischen 2,2 m und 2,8 m in der Höhe misst.

4. Konstruktionssystem nach einem der vorhergehenden Ansprüche, wobei die Platten (3) und die anderen Platten (3') ausziehbare Bereiche aufweisen, um Öffnungen zu schaffen.

5. Konstruktionssystem nach einem der vorhergehenden Ansprüche, wobei die Platten (3, 3') angeordnet sind, in den Balken (1') vom Typ 2 und zwischen den Nuten oder Schienen (8) der Balken (1) vom Typ 1 und der Pfosten (11) zu gleiten.

6. Konstruktionssystem nach einem der vorhergehenden Ansprüche, wobei die anderen Platten (3') Kammern (13) aufweisen, um Isolierelemente (9) anzuordnen, und die Platten (3) eine Aufnahme (14) auf einer der breiten Flächen (3A, 3B) aufweisen, um Isolierelemente (9) anzuordnen, wobei die Aufnahme (14) durch einen dichten Deckel (10) wieder verschließbar ist.

7. Konstruktionssystem nach einem der vorhergehenden Ansprüche, wobei die Balken (1, 1') an jedem Ende (5, 5') einen abnehmbaren Abschnitt (15) aus einem steiferen Material als die Balken (1, 1'), zum Beispiel aus Metall, aufweisen.

8. Konstruktionssystem nach einem der vorhergehenden Ansprüche, wobei jeder Balken (1, 1') zwischen 50 und 150 kg wiegt, jede Platte (3, 3') zwischen 40 kg und 120 kg wiegt und jedes Eckfügeelement (2, 2') zwischen 5 kg und 30 kg wiegt.

9. Konstruktionssystem nach einem der vorhergehenden Ansprüche, wobei das Konstruktionssystem aus recycelten Kunststoffen hergestellt ist.

10. Konstruktionssystem nach einem der vorhergehenden Ansprüche, wobei jeder Balken (1, 1') und jede Platte (3, 3') mit einer Substanz zur Verfestigung seiner bzw. ihrer Struktur gefüllt ist, zum Beispiel einer Erde, die mit einem härtendem Harz gemischt ist, Zement, Beton, Stampfmasse oder einer beliebigen anderen härtenden Substanz, ja sogar einem porösen Material wie beispielsweise einem Hartschaum.

11. Anordnung eines Behausungsmoduls, das aus einem Konstruktionssystem nach einem der vorhergehenden Ansprüche konstruiert ist, aufweisend ein dreidimensionales Gerüst, das aus Balken (1, 1') vom Typ 1 und 2, die horizontale rechteckige Rahmen bilden, und vertikalen Pfosten (11), die an den Ecken der rechteckigen Rahmen zusammengefügt sind, horizontalen Platten (3) zwischen den Balken vom Typ 1 und 2, und anderen vertikalen Platten (3'), die zwischen den Pfosten (11) und über den Profilbalken (1, 1') angeordnet sind, zusammengefügt ist.

12. Anordnung nach Anspruch 11 eines Konstruktionsmoduls mittels eines Satzes Balken (1, 1'), eines Satzes Eckfügeelemente (2, 2') und Platten (3, 3') nach einem der vorhergehenden Ansprüche, **dadurch gekennzeichnet, dass**, wenn die Eckfügeelemente (2, 2') am Boden befestigt sind, die anderen Platten (3') einen Windwiderstand von bis zu 160 kg/m2 aufweisen, die unteren Platten (3) Lasten am Boden von bis zu 224 kg/m2 tragen und die oberen Platten (3) Lasten auf dem oberen Abschnitt des Moduls von bis zu 107 kg/m2 tragen.

13. Anordnung nach Anspruch 11 oder 12, wobei, wenn die Eckfügeelemente (2, 2') am Boden befestigt sind, ein zweites Konstruktionsmodul an ein erstes Modul gekoppelt werden kann, wobei die anderen gemeinsamen Platten (3') zwischen den zwei Modulen optional montiert sind.

14. Anordnung von zwei übereinander angeordneten Konstruktionsmodulen nach Anspruch 13, wobei ein zweites Konstruktionsmodul auf einem ersten Konstruktionsmodul angeordnet ist, wobei die Eckfügeelemente (2, 2') des ersten Konstruktionsmoduls am Boden befestigt sind, die anderen Platten (3') einen Windwiderstand von bis zu 182 kg/m2 aufweisen, die unteren Platten (3) Lasten am Boden von bis zu 224 kg/m2 tragen und die oberen Platten (3) des zweiten Moduls Lasten auf dem oberen Abschnitt des zweiten Moduls von bis zu 107 kg/m2 tragen.

15. Anordnung nach einem der Ansprüche 13 oder 14, wobei jeder Balken (1, 1') ein abnehmbares Ende (5, 5') aus metallischem Material aufweist.

16. Anordnung nach einem der Ansprüche 12 bis 15, wobei der obere Abschnitt des Moduls einer Behausung dicht ist, entweder durch eine Montage der Platten (3, 3') oder durch die Positionierung einer Plane, auf die ein polymerisierendes Harz aufgetragen werden kann, das die Plane steif und undurchlässig macht.

17. Anordnung nach einem der Ansprüche 12 bis 16, die ein Element eines Gebäudes bildet, unter anderem eine Garage, ein Haus.

## Claims

1. A construction system for a module of a dwelling the main elements of which are made of plastic material, the construction system including:
- a set of hollow profiled beams (1, 1') of elongate rectilinear shape of type 1 and of type 2, the beams (1, 1') including at each end (5, 5') a transverse passage opening (6, 6') such that the transverse passage opening (6) of a beam (1) of type 1 comes to be nested with the transverse passage opening (6') of a beam (1') of type 2 when the two beams (1, 1') are assembled end to end at a right angle leaving a passage opening (6, 6') between the two ends (5, 5') of the beams (1, 1') so that two beams (1) of type 1 can be assembled with two beams (1') of type 2 to form a rectangular frame,
- a set of corner assembly elements (2, 2'), each assembly element (2, 2') including a body intended to pass through the transverse passage opening (6, 6') of the beams (1, 1') of type 1 and 2,
- a set of plates (3) that can be assembled between two beams (1) of type 1 when assembled or two beams (1') of type 2 when assembled to form a rectangular frame, and
- a set of posts (11) of hollow rectangular section the hollow ends of which come to be nested over a corner assembly element (2, 2') of a rectangular frame formed of beams (1, 1') of type 1 and of type 2 so as to form a three-dimensional framework,
the posts (11) include longitudinal rails or grooves (8) on two adjacent surfaces to receive other plates (3') between the posts (11) during assembly,
each hollow profile beam (1, 1') including along an upper surface spaced rails or grooves (8) intended to receive said other plates (3').

2. The construction system as claimed in claim 1, in which the beams (1) of type 1 have a closed square section and the beams (1') of type 2 have a U-shape section intended to receive said plates (3).

3. The construction system as claimed in claim 1 or 2, in which each construction module is able to be assembled with another module, each module measuring between 2.5 m and 3.5 m side length and between 2.2 m and 2.8 m high.

4. The construction system as claimed in any one of the preceding claims, in which the plates (3) and the other plates (3') include extractable zones for creating openings.

5. The construction system as claimed in any one of the preceding claims, in which the plates (3, 3') are adapted to slide in the beams (1') of type 2 and between the grooves or the rails (8) of the beams (1) of type 1 and the posts (11).

6. The construction system as claimed in any one of the preceding claims, in which the other plates (3') include compartments (13) for insulation elements (9) and the plates (3) include a housing (14) on one of the wide faces (3A, 3B) for insulation elements (9), the housing (14) being closable by a sealed cover (10).

7. The construction system as claimed in any one of the preceding claims, in which the beams (1, 1') include at each end (5, 5') a removable part (15) made of a more rigid material than the beams (1, 1'), for example of metal.

8. The construction system as claimed in any one of the preceding claims, in which each beam (1, 1') weighs between 50 and 150 kg, each plate (3, 3') weighs between 40 kg and 120 kg and each corner assembly element (2, 2') weighs between 5 kg and 30 kg.

9. The construction system as claimed in any one of the preceding claims, in which the construction system is made from recycled plastic materials.

10. The construction system as claimed in any one of the preceding claims, in which each beam (1, 1') and each plate (3, 3') is filled with a substance intended to harden its structure, for example soil mixed with a hardening resin, cement, concrete, loam or any other hardening substance, or even a porous material such as a rigid foam.

11. An assembly of a habitation module constructed from a construction system as claimed in any one of the preceding claims, including a three-dimensional framework assembled from beams (1, 1') of type 1 and type 2 forming horizontal rectangular frames and vertical posts (11) assembled to the corners of the rectangular frames, horizontal plates (3) between the beams of type 1 and type 2, and other, vertical plates (3') between the posts (11) and superposed on the profiled beams (1, 1').

12. An assembly as claimed in claim 11 of a construction module by means of a set of beams (1, 1'), a set of corner assembly elements (2, 2') and plates (3, 3') as claimed in any one of the preceding claims, **characterized in that** when the corner assembly elements (2, 2') are fixed to the ground, the other plates (3') resist a wind load up to 160 kg/m², the lower plates (3) withstand ground loads up to 224 kg/m² and the upper plates (3) withstand loads on the upper part of the module up to 107 kg/m2.

13. The assembly as claimed in claim 11 or 12, in which when the corner assembly elements (2, 2') are fixed to the ground a second construction module may be coupled to a first module, the other plates (3') common to the two modules being optionally mounted.

14. An assembly according to claim 13 of two superposed construction modules, a second construction module being arranged on a first construction module, the corner assembly elements (2, 2') of the first construction modules being fixed to the ground, the other plates (3') resisting a wind load up to 182 kg/m², the lower plates (3) withstanding ground loads up to 224 kg/m² and the upper plates (3) of the second module withstand loads on the upper part of said second module up to 107 kg/m².

15. The assembly as claimed in either one of claims 13 or 14, in which each beam (1, 1') has a removable metal end (5, 5').

16. The assembly as claimed in any one of claims 12 to 15, in which the upper part of the module of a dwelling is sealed either by mounting plates (3, 3') or by positioning a covering to which may be applied a polymerizing resin rendering said covering rigid and impermeable.

17. The assembly as claimed in any one of claims 12 to 16 constituting an element of a dwelling, among others a garage, a house.
